# EUROPEAN PATENT SPECIFICATION

(11) **EP 4 184 440 B1**
(45) Date of publication and mention of the grant of the patent: **01.10.2025**
(21) Application number: 22163854.7
(22) Date of filing: 23.03.2022
(51) Int. Cl.: G06T 7/593, G06T 7/11, G06T 7/194, G06T 7/136

(54) **A DEVICE FOR DETECTING COMPONENTS AND THEIR DETAILS IN 3D SPACE**
VORRICHTUNG ZUR DETEKTION VON KOMPONENTEN UND DEREN DETAILS IN EINEM 3D-RAUM
DISPOSITIF DE DÉTECTION DE COMPOSANTS ET DE LEUR DÉTAILS DANS UN ESPACE 3D

(30) Priority: 23.11.2021 PL 43959821
(43) Date of publication of application: 24.05.2023
(73) Proprietor: Airob Vision Systems Sp. z o.o., 53-608 Wroclaw (PL)
(72) Inventor: Skalski, Sebastian, 55-095 Siedlec (PL); Kasprzak, Tomasz, 55-011 Siechnice (PL)
(74) Representative: Wroblewski, Marcin Jan

(56) References cited:
- JP-A- 2008 092 120

## Description

### The field of the invention

The disclosure relates to a device for detecting components and their details in 3D space, especially details of electronic components. Whereby detection is understood as detecting the edges, acquiring the dimensions and/or shapes of these components and their details, and thus determining and verifying their exact position.

### Description of the state of the art

From the international PCT application WO2006004202A1 a device for identifying electronic components is known. This device makes possible to generate an image of electronic components, and in particular to generate images of electronic components to be mounted on a substrate, for example a printed circuit board. The device includes an imaging unit comprising a camera and an illumination component that emits white light onto the tested electronic component and onto a measurement background attached to a head holding the tested electronic component. The said measurement background is in the form of a sheet. As a result, the background colour can be changed from blue to red by the operator of the machine by changing the sheet.

From the European patent application EP1887512A1 a device for automatically detecting the configuration of electronic components is known. Configuration of electronic components is understood as acquiring their dimensions and/or shapes from previously taken photos. This solution can be used to identify the incorrect position of an electronic component during its assembly on a printed circuit board. The device comprises a camera and a lighting fixture which illuminates the tested electronic component and the measurement background with the white light. The measurement background may be in the form of a blue sheet.

In turn, Japanese patent application JP2004213562A discloses a device for automatic recognition of electronic components. The device comprises an imaging unit equipped with a single camera or a set of cameras with CCD image sensors and a device for illuminating the tested electronic component. The said device also contains a measurement background, the colour of which can be changed.

Moreover, European patent application EP2592917A1 discloses a camera system for aligning components of a printed circuit board. The system comprises two cameras for taking images of the printed circuit board with its components, arranged on opposite sides thereof. The solutions known from the state of the art allow for the detection of details in 3D space, but the uniform background in the viewing area of their cameras causes an excessive increase in the degree of reflection of the background colour in the details of the tested component, in particular in its glossy fragments. The glossy fragments thus take on the background colour in the camera shots. This makes it impossible to distinguish these fragments from the background, and consequently makes it impossible to precisely detect the location of the details of this component, and as a result, to precisely determine their position.

Japanese patent application JP2008092120A discloses image combination system which uses a chroma keying. This system comprises a semi-transparent screen which is located behind an object to be photographed. The semi-transparent screen is used as a background for the photography. The system is provided with first and second projectors displaying backgrounds on a back of the semi-transparent screen. The first projector displays a single colour background image which consists of predetermined single colour. The second projector, projects simultaneously with the first projector, and displays normal background images, including backgrounds in single colour. For example, displayed background can be in green or blue colour. These images should be combined by different projection angles from first and second projectors. Images projected by the first and second projector are visible on the screen when viewed at different angles. The system comprises also first and second photographing devices, especially in a form of digital cameras. The first photographing device is taking images of objects against the background displayed by the second projector, whereas the second photographing device is taking images of objects against the background displayed by the first projector. Especially it is disclosed that a green single colour background image and the blue single colour background image are alternately projected on the back of a screen so that it may become a different single colour background image from the first projector. Thus, the colour of the single colour background image projected by the first projector and the projector is mutually replaced. As a consequence, the object to be photographed, for example a person, is photographed for a backgrounds with a different single color. Subsequently the photographed object is cut out from each picked up image by the first and second photographing devices. The aim of the invention is to develop a device for detecting components and their details in 3D space, enabling precise determination of their position.

### The essence of the invention

The subject of the invention is a device for detecting components and their details in 3D space, in particular electronic components, comprising a housing, a chroma-key background, an image capturing unit comprising at least two cameras, a measurement area intended for placing the tested component in it, located between the image capturing unit and the chroma-key background, and a processing and control unit. The essence of the invention is that the chroma-key background contains simultaneously one next to another at least two uniform chroma-key fields in colours spaced at least 90° apart on the colour wheel, and the cameras of the image capture unit are directed diagonally towards the chroma-key fields, with the individual cameras directed at the chroma-key fields in different colours. The processing and control unit is configured to separate the tested component from an image captured by each of the cameras, respectively, and detect the individual points defining the edges of the tested component on each of the images, and is further configured to, using a triangulation algorithm, determine coordinates of points for each axis in the Cartesian coordinate system forming edges of the tested component. For the purposes of the present invention, it is assumed that the dimensions of the measurement area define the maximum dimensions of the tested component.

Moreover, it was assumed that the colour wheel is a graphic model in the form of a circle, representing the principles of the creating and mixing of colours. A continuous spectrum of a white light is allegedly drawn around the centre of the colour circle in a clockwise direction. The violet colour, that is the shortest visible radiation, turns red, that is the longest visible radiation, creating a closed cycle of colour changes. According to the terminology related to the colour wheel, a square of colours can be distinguished on the colour wheel, those are colours spaced on the colour wheel every 90°, a triad of colours, those are colours spaced on the colour wheel every 120°, and complementary colours, those are colours on opposite sides of the colour wheel. Complementary colours create strong contrasts.

The use of at least two uniform chroma-key fields in colours spaced at least 90° apart on the colour wheel and at least two cameras of the image capture unit directed diagonally onto chroma-key fields, with individual cameras pointing at chroma-key fields of different colours, ensures precise component detection and their details in 3D space, and as a result, precise determination of their location. This is due to the complete elimination, or significant reduction, of reflections of a colour similar to the background in glossy or specular parts of the tested components. The simultaneous application of two chroma-key fields with colours spaced at least 90° apart on the colour wheel leads to reflections contrasting with the background in glossy or specular parts of the tested components. In the fields of view of cameras directed at chroma-key fields with colours at least 90° apart from each other on the colour wheel, there may be objects with glossy or specular surfaces. This will result in the fact that in the field of view of the camera directed at the first chroma-key field there will be a fragment of the object reflecting different from the first, the background of the second chroma-key field. On the other hand, in the field of view of the camera directed at the second chroma-key field, there will be a fragment of the object reflecting different from the second, the background of the first chroma-key field. This construction of the device allows for obtaining images of objects contrasting with the backgrounds used, and thus enables the use of fast-acting image processing algorithms for image processing.

Preferably the processing and control unit is configured to separate the tested component from the captured images and detect the individual points defining the edges of the component using a chroma keying algorithm.

It is desirable when the colours of the chroma-key fields are spaced 180° apart on the colour wheel, so that a strong contrast between the chroma-key fields is obtained.

It is particularly appropriate if the optical axes of the cameras intersect in the measurement area, which allows for a high accuracy of detail detection.

Preferably, the image capturing unit comprises at least one illuminator for illuminating the tested component and its details positioned opposite to the chroma-key background. The use of at least one illuminator positioned opposite to the chroma-key background allows to adjust the intensity of the incident light on the tested component and its details, and thus allows to effectively reduce the noise, shadows or blur visible in the captured images, and at the same time ensures independence from the influence of external light.

Preferably, the image capture unit includes at least two side illuminators on the side walls of the housing. The use of at least two side illuminators on the side walls of the housing provides greater efficiency in adjusting the intensity of light falling on the tested component and its details.

Preferably, the chroma-key background comprises at least one LED display adapted to display at least two uniform chroma-key fields, each of the chroma-key fields having a different colour.

In another preferred possibility, the chroma-key background comprises two LED displays constituting a separate chroma-key fields.

The use of a chroma-key background in the form of at least one LED display adapted to display at least two chroma-key fields provides a simple possibility of selecting colours that differ from the colours of the tested component, by simply changing the colours on the LED display, and as a result, accelerating the precise detection of components and their details, leading to quickening precise determination of their position.

Alternatively, but also preferably, the chroma-key fields are in the form of sheets. Such sheets may be in the form of boards in selected colours.

It is particularly preferably if the housing in the area of the chroma-key fields comprises guides for attaching sheets or at least one LED display which are inserted into the dedicated chroma-key fields of the chroma-key background.

Preferably, said device comprises adjustable holders for mounting cameras. The use of adjustable mounting holders allows to change the distance between the cameras and to correct the angle of view of the lenses of these cameras. Changing the distance between the cameras allows you to measure objects with a different spacing of details, for example pins in THT components, and thus also to measure details located close to each other. Changing the spacing of cameras affects the accuracy of detection. The closer the cameras are to each other, the lower the detection accuracy is, but thanks to this the device is able to detect details even very close to each other.

Preferably, the cameras include lenses with a minimum focusing distance of less than 20 cm.

Preferably, the minimum focusing distance of the camera lenses is 10 cm.

Preferably, one chroma-key field is green and the other chroma-key field is blue.

Preferably, the housing comprises a through hole for introducing the component to be tested into the measurement area.

### Advantages of the invention

The main advantage of the invention is the reduction of the detection time of the details of the tested component, and consequently the reduction of the time necessary to determine the position of these details compared to the solutions known from the state of the art. With the use of the device, the detection of details of the tested component can be achieved in less than one second, amounting to about 500 ms, or even shorter.

The device according to the invention provides the accuracy of determining the location of the details of the component under test at the level of hundredths of a millimetre for each of the axes in the Cartesian coordinate system.

The device according to the invention enables the use of automatic algorithms for the detection of tested components and their details.

### Description of the figures of the drawing

The subject of the invention is shown in the embodiments on the drawing, in which:

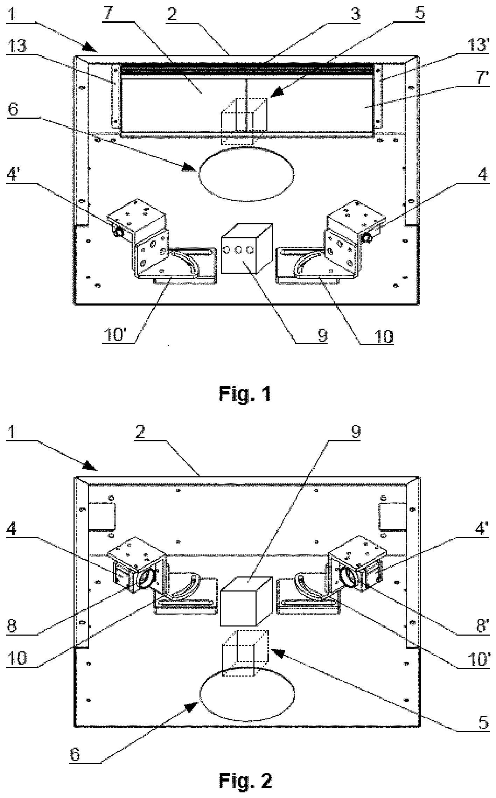

- Fig. 1: shows a device for detecting components and their details in 3D space according to a first embodiment in a perspective view partially sectioned from the side of the image capturing unit;
- Fig. 2: shows the device for detecting components and their details in 3D space according to a first embodiment in a perspective view partially sectioned from the side of the chroma-key background;

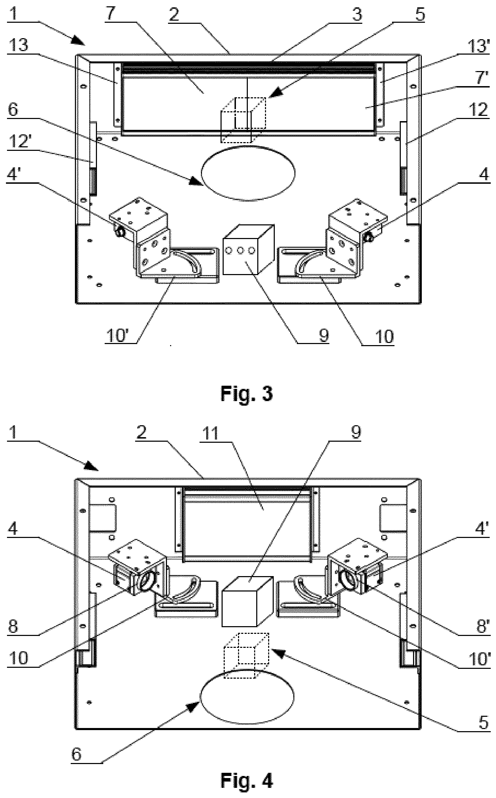

- Fig. 3: shows an device for detecting components and details thereof in 3D space according to a second and third embodiment in a perspective view partially sectioned from the side of the image capturing unit;
- Fig. 4: shows the device for detecting components and their details in 3D space according to a second and third embodiment in perspective view with a partial section from the side of the chroma-key background;

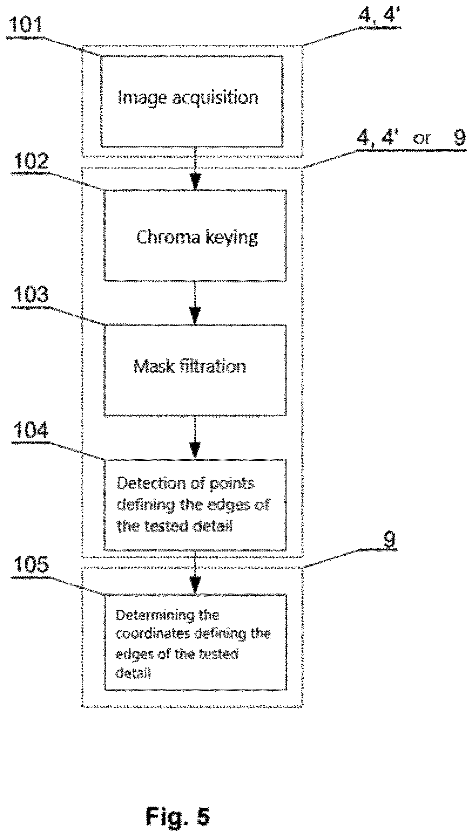

- Fig. 5: schematically shows the method of detecting the tested components and their details, implemented in the device;

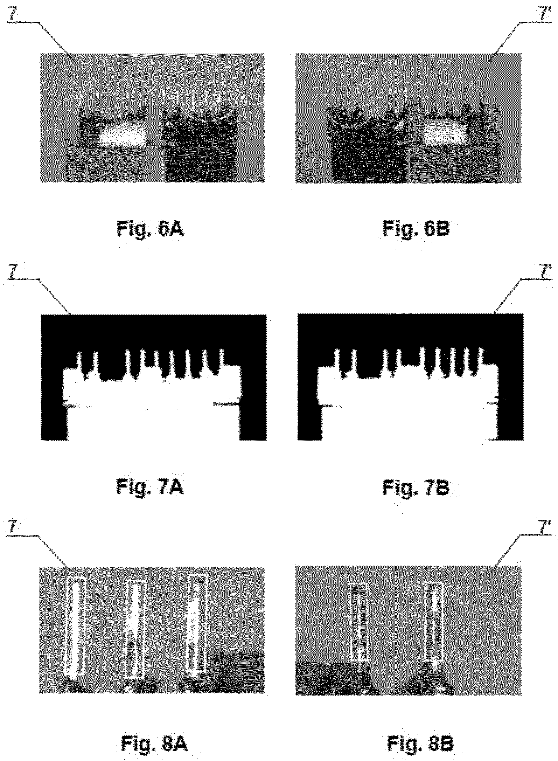

- Fig. 6A: shows image acquisition on a device according to the invention using a green chroma-key field;
- Fig. 6B: shows image acquisition on a device according to the invention using a blue chroma-key field;
- Fig. 7A: shows the chroma keying of an image captured with a green chroma-key field;
- Fig. 7B: shows the chroma keying of an image captured with a blue chroma-key field;
- Fig. 8A: shows the detection of points defining the edges of a test component, including its details, for an image captured using a green chroma-key field;
- Fig. 8B: shows the detection of points defining the edges of a test component, including its details, for an image captured using a blue chroma-key field.

### Detailed description of the embodiments

### First embodiment of the invention

The device 1 for detecting components and their details in 3D space, in particular electronic components, comprises a housing 2, a chroma-key background 3 and an image capture unit containing two cameras 4, 4'. The housing 2 has a base with walls surrounding the components of the device 1. The housing 2 is thus a closed structure enclosing the components located inside it. In other embodiments, the housing may be in the form of a base on which the components of the device are arranged, then it primarily fulfils the function of allowing the correct assembly of the device parts.

The device 1 also comprises a measurement area 5 for placing in it a component to be tested, which is located between the image capturing unit and the chroma-key background 3, and thus inside the housing 2. The dimensions of the measurement area 5 define the maximum dimensions of the component to be tested. The measurement area 5 may, for example, be in the form of a cube 4cm x 4cm x 4cm, which allows electronic components to be accommodated therein. The housing 2 has a through hole 6 for introducing the component to be tested into the measurement area 5. This hole allows, for example, the entry of a robot with the tested component, or a corresponding movement of a robot arm guiding the tested component.

The chroma-key background 3 is an LED display having the form of a matrix with LED diodes, adapted to display two chroma-key fields 7, 7', each of the chroma-key fields 7, 7' having a different colour, and these colours are spaced 90° from each other on the colour wheel. In other equally preferred embodiments, the colours may be 120° or 180° apart, so that the colours may be complementary colours. Moreover, the colours of individual chroma-key fields 7, 7' should be as far as possible from the colours of the tested component. Increasing the contrast between the chroma-key fields 3 makes it easier to adjust the device and allows for more precise results. The LED display is slid into dedicated guides 13, 13' located on the housing 2 in the area of the chroma-key fields 7, 7'.

The following are exemplary colour combinations of the chroma-key fields that can be used in the device according to the invention, and, as already mentioned, when selecting these colours it is equally important that they should differ from the colours present on the component being measured.

| The colour of the first chroma-key field | The colour of the second chroma-key field |
|---|---|
| Magenta | Cyan |
| Red | Blue |
| Violet | Green |
| Orange | Green |

In the present embodiment, the chroma-key field 7 is green and the chroma-key field 7' is blue. In other equally preferred embodiments, this chroma-key field 7' may be green and chroma-key field 7 may be blue. The colour pairs can therefore be changed between the individual fields 7, 7'. The use of the chroma-key background 3 in the form of the LED display adapted to display two chroma-key fields 7, 7', where each of the chroma-key fields 7, 7' has a different colour, provides a simple possibility of selecting colours that differ from the colours of the tested component, by simply changing the colours on the LED display and as a result, acceleration of precise detection of components and their details, leading to acceleration of precise determination of their position.

The cameras 4, 4' of the image capturing unit are directed diagonally towards the chroma-key fields 7, 7', the individual cameras 4, 4' facing the chroma-key fields 7, 7' of different colours. In a particularly good setting of the cameras 4, 4', their optical axes should intersect in the measurement area 5, and the best setting is when the tested component is placed at the point of intersection of the optical axes of the cameras 4, 4'. Each of the chroma-key fields 7, 7' is a dedicated field for the shot from the corresponding 4, 4' camera. There is a green chroma-key field 7 in the field of view of camera 4, and there is a blue chroma-key field 7' in the field of view of camera 4'. The cameras 4, 4' are preferably 6 Mpix colour cameras and include lenses 8, 8' with a 25 mm focal length and an aperture range between f12 -f16, which allows the optimum depth of field to be obtained for a three-dimensional image. In addition, the minimum focusing distance of lenses 8, 8' of cameras 4, 4' is 10 cm. In other equally preferred embodiments, the cameras 4, 4' may be 8 Mpix cameras.

The use of a chroma-key background 3 containing two uniform chroma-key fields with colours spaced by 90° and two cameras 4, 4' of the image capture unit directed diagonally onto the chroma-key fields 7, 7', where the individual cameras 4, 4 'are directed at the chroma-key fields 7, 7' with different colours, ensures precise detection of components and their details in 3D space, and as a result, precise determination of their position. The measuring device 1 provides a detection accuracy of hundredths of a millimetre for each axis in the Cartesian coordinate system. For example, the mentioned device allows to determine the position of the details of the tested component with an accuracy of 0.05 mm. This is due to the complete elimination or significant reduction of reflections of a colour similar to the background in the glossy or specular parts of the tested components. On the other hand, the use of two chroma-key fields 7, 7' with colours spaced by 180° leads to the most contrasting reflections with the background in glossy or specular parts of the tested components. In the fields of view of the cameras 4, 4' aimed at the chroma-key fields 7, 7' with colours spaced at least 90° apart, there may be objects with glossy or mirror surfaces. This will result in the fact that in the field of view of the camera 4 directed at the first chroma-key field 7 there will be a fragment of the object reflecting different from the first, the background of the second chroma-key field 7'. On the other hand, in the field of view of the camera 4' directed at the second chroma-key field 7', there will be a fragment of the object reflecting different from the second, the background of the first chroma-key field 7. Such a construction of the device allows for obtaining images of objects contrasting with the backgrounds used, and thus allows for the use in image processing fast-acting image processing algorithms.

Moreover, the applied configuration ensures a reduction in the detection time of the details of the tested component, and consequently the reduction of the time necessary to determine the position of these details in comparison with the solutions known from the state of the art. The device 1 is able to perform detail detection of the tested component in less than one second, including approximately 500 ms.

The device 1 also comprises a processing and control unit 9 adapted to precisely determine the position of components and their details in 3D space on the basis of data obtained from cameras 4, 4'.

Moreover, the device 1 for detecting components and their details in 3D space comprises holders 10, 10' for mounting of cameras 4, 4'. The use of holders 10, 10' allows to change the distance between the cameras 4, 4' and to change or correct the viewing angle of the lenses 8, 8' of these cameras. Consequently, a single holder 10, 10' allows the camera 4, 4' to be positioned linearly, in a plane parallel to the chroma-key background, and angularly. Changing the distance between the cameras 4, 4' allows the detection of components with a different spacing of details, for example pins in THT components, and as a result, determining the position of components with a different spacing of details. Thus, it is possible to determine the position of parts of the test component located close to each other. Changing the 4, 4' camera spacing affects the detection accuracy. The closer the cameras 4, 4' are to each other, the lower the detection accuracy is, but the device 1 is thus able to detect details of components located closer to each other.

Detection of components and their details in 3D space with the use of device 1 is carried out according to the following steps. Initially, using each of the cameras 4, 4', images 101 of the tested component are acquired together with its details. Thus, the camera 4 diagonally facing chroma-key field 7 captures an image of the tested component against a green background, and the camera 4' facing diagonally across chroma-key field 7' captures an image of the tested component against a blue background. In the next step, using the chroma keying algorithm, the tested component with its details is separated 102 from the captured images, and with it the mask of its shape. The chroma keying algorithm is implemented in the memory of the processing and control unit 9, which in the exemplary embodiment is a PC with appropriate software, which is an integral part of the measuring device. The chroma keying algorithm may also advantageously be implemented in the memory of each of the cameras 4, 4'. Then, on each of the images, this mask is filtered 103 to precisely exhibit the tested component and its details, and individual points defining the edges of the tested component, including its details, are detected 104. These steps are also carried out with the use of the processing and control unit 9. Then the data obtained in this way is further processed in the processing and control unit 9 and using the triangulation algorithms implemented in its memory, coordinates of points for each axis in the Cartesian coordinate system forming the edges of the tested object and its details are determined 105, including glossy details or those with a mirror-like reflection. This allows for precise determination of the position of, in particular, the glossy pins of electronic components.

### Second embodiment of the invention

Device 1 for detecting components and their details in 3D space, in particular electronic components, as in the first example, with the difference that the chroma-key fields 7, 7' of the chroma-key background 3 are in the form of sheets. Such sheets can be in the form of boards of selected colours, which are inserted into guides 13, 13' dedicated for this purpose, located on the housing 2 in the area of the chroma-key fields 7, 7'.

Moreover, the image capturing unit comprises an illuminator 11 for illuminating the tested component and its details located opposite to the chroma-key background 3. Moreover, the image capturing unit comprises two side illuminators 12, 12' for illuminating the examined component and its details, located on the side walls of the housing 2.

The use of the said illuminator 11 located opposite to the chroma-key background 3 enables the adjustment of the intensity of the light incident on the tested component and its details, and thus allows to effectively reduce the noise, shadows or blur visible in the captured images, and at the same time ensures independence from the influence of external light. Therefore, it is extremely important, especially in the case of extracting the tested component and its details from the captured image realized with the use of chroma keying algorithms.

The use of two side illuminators 12, 12' located on the side walls of the housing 2 provides a more efficient control of the light intensity incident on the tested component and its details.

Said illuminators 11, 12, 12' can be controlled by the processing and control unit 9. Thus, it is possible to adjust the intensity of the light generated by the illuminators 11, 12, 12' and as a result incident on the tested component and its details.

### Third embodiment of the invention

Device 1 for detecting components and details thereof in 3D space, in particular electronic components, as in the second embodiment, with an image capturing device comprising an illuminator 11 for illuminating the component under test and its details positioned opposite to the chroma-key background 3. The image capturing device includes two side illuminators 12, 12' to illuminate the tested component and its details, located on the side walls of the housing 2.

The chroma-key background 3 is a LED display having the form of a matrix with LED diodes adapted to display two chroma-key fields 7, 7'. In this case, when an LED display is used, the processing and control unit 9 controls the illuminators 11, 12, 12', and thus can activate the necessary amount of them and regulate the intensity of the light incident on the tested component and its details. Thus, a scenario is possible in which detection is performed with the LED display illuminated and all illuminators 11, 12, 12' are turned off. As a result, detection is possible when the tested component is underexposed.

## Claims

1. A device (1) for the detecting components and their details in 3D space, in particular details of electronic components, comprising:
- a housing (2),
- a chroma-key background (3),
- an image capture unit containing at least two cameras (4, 4'),
- a measurement area (5) intended for placing the tested component in it, located between the image capture unit and the chroma-key background (3),
- a processing and control unit (9),
**characterized in that**
- the chroma-key background (3) contains simultaneously one next to another at least two uniform chroma-key fields (7, 7') in colours spaced by at least 90° on the colour wheel, and
- the cameras (4, 4') of the image capture unit are directed diagonally towards the chroma-key fields (7, 7'), with the individual cameras (4, 4') facing the chroma-key fields (7, 7') in different colours, and
- the processing and control unit (9) is configured to separate the tested component from an image captured by each of the cameras, respectively, and detect the individual points defining the edges of the tested component on each of the images, and is further configured to, using a triangulation algorithm, determine coordinates of points for each axis in the Cartesian coordinate system forming edges of the tested component.

2. The device according to claim 1, **characterized in that** the processing and control unit (9) is configured to separate the tested component from the captured images and detect the individual points defining the edges of the component using a chroma keying algorithm.

3. The device according to claim 1 or 2, **characterized in that** the colours of the chroma-key fields (7, 7') are spaced 180° apart on the colour wheel.

4. The device according any of the claims 1 to 3, **characterized in that** the optical axes of the cameras 4, 4' intersect in the measurement area (5).

5. The device according to any of the claims 1 to 4, **characterized in that** the image capturing unit comprises at least one illuminator (11) positioned opposite to the chroma-key background (3).

6. The device according to any of the claims 1 to 5, **characterized in that** the image capturing unit comprises at least two side illuminators (12, 12') positioned on the side walls of the housing (2).

7. The device according to any of the claims 1 to 6, **characterized in that** the chroma-key background (3) comprises at least one LED display adapted to display at least two uniform chroma-key fields (7, 7'), each of the chroma-key fields (7, 7') having a different colour.

8. Device according to any of the claims 1 to 7, **characterized in that** the chroma-key background (3) comprises of two LED displays constituting separate chroma-key fields (7, 7').

9. The device according to any of the claims 1 to 8, **characterized in that** the chroma-key fields (7,7') are in the form of sheets.

10. The device according to claim 9, **characterized in that** the housing (2) comprises guides (13,13') for attaching sheets or at least one LED display.

11. A device according to any of the claims 1 to 10, **characterized in that** it comprises adjustable holders (10, 10') for mounting of cameras (4, 4').

12. The device according to any of the claims 1 to 11, **characterized in that** the cameras (4, 4') comprise lenses (8, 8') with a minimum focusing distance of less than 20 cm.

13. The device according to claim 12, **characterized in that** the cameras (4, 4') comprise lenses (8,8') with a minimum focusing distance of 10 cm.

14. The device according to any of the claims 1 to 13 **characterized in that** one chroma-key field (7) is green and the other chroma-key field (7') is blue, or vice versa.

15. A device according to any of the claims 1 to 14, **characterized in that** the housing (2) comprises a through hole (6) for introducing the component to be tested into the measuring area (5).

## Patentansprüche

1. Ein Gerät (1) zum Erkennen von Bauteilen und deren Details im 3D-Raum, insbesondere von Details elektronischer Bauteile, welches Folgendes umfasst:
- ein Gehäuse (2),
- einen Chroma-Key-Hintergrund (3),
- eine Bilderfassungseinheit mit mindestens zwei Kameras (4, 4'),
- einen Messbereich (5), in dem das geprüfte Bauteil platziert werden kann und der sich zwischen der Bilderfassungseinheit und dem Chroma-Key-Hintergrund (3) befindet,
- eine Verarbeitungs- und Steuereinheit (9),
**dadurch gekennzeichnet, dass**
- der Chroma-Key-Hintergrund (3) gleichzeitig mindestens zwei gleichmäßige Chroma-Key-Felder (7, 7') in Farben enthält, die auf dem Farbkreis um mindestens 90° voneinander beabstandet sind, und
- die Kameras (4, 4') der Bildaufnahmeeinheit diagonal auf die Chroma-Key-Felder (7, 7') gerichtet sind, wobei die einzelnen Kameras (4, 4') den Chroma-Key-Feldern (7, 7') in unterschiedlichen Farben gegenüberstehen, und
- die Verarbeitungs- und Steuereinheit (9) so konfiguriert ist, dass sie das geprüfte Bauteil aus einem von jeder der Kameras aufgenommenen Bild jeweils separiert und die einzelnen Punkte, die Kanten des geprüften Bauteils definieren, auf jedem der Bilder erkennt, und ferner so konfiguriert ist, dass sie unter Verwendung eines Triangulationsalgorithmus die Koordinaten der Punkte für jede Achse im kartesischen Koordinatensystem bestimmt, die Kanten des geprüften Bauteils bilden.

2. Das Gerät nach Anspruch 1, **dadurch gekennzeichnet, dass** die Verarbeitungs- und Steuereinheit (9) so konfiguriert ist, dass sie das geprüfte Bauteil aus den aufgenommenen Bildern separiert und die einzelnen Punkte, die Kanten des Bauteils definieren, mit einem Chroma-Keying-Algorithmus erkennt.

3. Das Gerät nach Anspruch 1 oder 2, **dadurch gekennzeichnet, dass** die Farben der Chroma-Key-Felder (7, 7') auf dem Farbkreis um 180° voneinander beabstandet sind.

4. Das Gerät nach einem der Ansprüche 1 bis 3, **dadurch gekennzeichnet, dass** sich die optischen Achsen der Kameras 4, 4' im Messbereich (5) schneiden.

5. Das Gerät nach einem der Ansprüche 1 bis 4, **dadurch gekennzeichnet, dass** die Bilderfassungseinheit mindestens einen Beleuchter (11) umfasst, der gegenüber dem Chroma-Key-Hintergrund (3) angeordnet ist.

6. Das Gerät nach einem der Ansprüche 1 bis 5, **dadurch gekennzeichnet, dass** die Bilderfassungseinheit mindestens zwei seitliche Beleuchter (12, 12') umfasst, die an den Seitenwänden des Gehäuses (2) angebracht sind.

7. Das Gerät nach einem der Ansprüche 1 bis 6, **dadurch gekennzeichnet, dass** der Chroma-Key-Hintergrund (3) mindestens eine LED-Anzeige umfasst, die so beschaffen ist, dass sie mindestens zwei einheitliche Chroma-Key-Felder (7, 7') anzeigt, wobei jedes der Chroma-Key-Felder (7, 7') eine andere Farbe hat.

8. Das Gerät nach einem der Ansprüche 1 bis 7, **dadurch gekennzeichnet, dass** der Chroma-Key-Hintergrund (3) aus zwei LED-Anzeigen besteht, die separate Chroma-Key-Felder (7, 7') bilden.

9. Das Gerät nach einem der Ansprüche 1 bis 8, **dadurch gekennzeichnet, dass** die Chroma-Key-Felder (7, 7') die Form von Blättern haben.

10. Das Gerät nach Anspruch 9, **dadurch gekennzeichnet, dass** das Gehäuse (2) Führungen (13, 13') zum Anbringen von Blättern oder mindestens einer LED-Anzeige umfasst.

11. Das Gerät nach einem der Ansprüche 1 bis 10, **dadurch gekennzeichnet, dass** es verstellbare Halterungen (10, 10') zur Befestigung von Kameras (4, 4') umfasst.

12. Das Gerät nach einem der Ansprüche 1 bis 11, **dadurch gekennzeichnet, dass** die Kameras (4, 4') Objektive (8, 8') mit einem Mindestfokussierabstand von weniger als 20 cm aufweisen.

13. Das Gerät nach Anspruch 12, **dadurch gekennzeichnet, dass** die Kameras (4, 4') Objektive (8, 8') mit einem Mindestfokussierabstand von 10 cm aufweisen.

14. Das Gerät nach einem der Ansprüche 1 bis 13, **dadurch gekennzeichnet, dass** ein Chroma-Key-Feld (7) grün und das andere Chroma-Key-Feld (7') blau ist, oder umgekehrt.

15. Das Gerät nach einem der Ansprüche 1 bis 14, **dadurch gekennzeichnet, dass** das Gehäuse (2) eine Durchgangsöffnung (6) zum Einführen des zu prüfenden Bauteils in den Messbereich (5) aufweist.

## Revendications

1. Un dispositif (1) pour détecter des composants et leurs détails dans un espace 3D, en particulier les détails de composants électroniques, comprenant :
- un boîtier (2),
- un arrière-plan à incrustation chromatique (3),
- une unité de capture d'images comprenant au moins deux caméras (4, 4'),
- une zone de mesure (5) destinée à accueillir le composant testé, située entre l'unité de capture d'images et l'arrière-plan à incrustation chromatique (3),
- une unité de traitement et de contrôle (9),
**caractérisé en ce que**
- l'arrière-plan à incrustation chromatique (3) contient simultanément, l'un à côté de l'autre, au moins deux champs à incrustation chromatique uniformes (7, 7') dans des couleurs espacées d'au moins 90° sur le cercle chromatique, et
- les caméras (4, 4') de l'unité de capture d'images sont orientées en diagonale vers les champs d'incrustation chromatique (7, 7'), les caméras individuelles (4, 4') étant orientées vers les champs d'incrustation chromatique (7, 7') dans différentes couleurs, et
- l'unité de traitement et de contrôle (9) est configurée pour séparer le composant testé d'une image capturée par chacune des caméras, respectivement, et détecter les points individuels définissant les bords du composant testé sur chacune des images, etest en outre configurée pour déterminer, à l'aide d'un algorithme de triangulation, les coordonnées des points pour chaque axe dans le système de coordonnées cartésiennes formant les bords du composant testé.

2. Le dispositif selon la revendication 1, **caractérisé en ce que** l'unité de traitement et de contrôle (9) est configurée pour séparer le composant testé des images capturées et détecter les points individuels définissant les bords du composant à l'aide d'un algorithme d'incrustation chromatique.

3. Le dispositif selon la revendication 1 ou 2, **caractérisé en ce que** les couleurs des champs d'incrustation chromatique (7, 7') sont espacées de 180° sur le cercle chromatique.

4. Le dispositif selon l'une des revendications 1 à 3, **caractérisé en ce que** les axes optiques des caméras 4, 4' se croisent dans la zone de mesure (5).

5. Le dispositif selon l'une des revendications 1 à 4, **caractérisé en ce que** l'unité de capture d'image comprend au moins un illuminateur (11) positionné à l'opposé de l'arrière-plan à incrustation chromatique (3).

6. Le dispositif selon l'une des revendications 1 à 5, **caractérisé en ce que** l'unité de capture d'images comprend au moins deux illuminateurs latéraux (12, 12') positionnés sur les parois latérales du boîtier (2).

7. Le dispositif selon l'une des revendications 1 à 6, **caractérisé en ce que** l'arrière-plan à incrustation chromatique (3) comprend au moins un écran LED adapté pour afficher au moins deux champs d'incrustation chromatique uniformes (7, 7'), chacun des champs d'incrustation chromatique (7, 7') ayant une couleur différente.

8. Le dispositif selon l'une des revendications 1 à 7, **caractérisé en ce que** l'arrière-plan à incrustation chromatique (3) comprend deux écrans LED constituant des champs d'incrustation chromatique séparés (7, 7').

9. Le dispositif selon l'une des revendications 1 à 8, **caractérisé en ce que** les champs d'incrustation chromatique (7, 7') se présentent sous la forme de feuilles.

10. Le dispositif selon la revendication 9, **caractérisé en ce que** le boîtier (2) comprend des guides (13, 13') pour fixer des feuilles ou au moins un écran LED.

11. Le dispositif selon l'une des revendications 1 à 10, **caractérisé en ce qu'**il comprend des supports réglables (10, 10') pour le montage de caméras (4, 4').

12. Le dispositif selon l'une des revendications 1 à 11, **caractérisé en ce que** les caméras (4, 4') comprennent des objectifs (8, 8') ayant une distance minimale de mise au point inférieure à 20 cm.

13. Le dispositif selon la revendication 12, **caractérisé en ce que** les caméras (4, 4') comprennent des objectifs (8, 8') ayant une distance minimale de mise au point de 10 cm.

14. Le dispositif selon l'une des revendications 1 à 13, **caractérisé en ce qu'**un champ d'incrustation chromatique (7) est vert et l'autre champ d'incrustation chromatique (7') est bleu, ou inversement.

15. Le dispositif selon l'une des revendications 1 à 14, **caractérisé en ce que** le boîtier (2) comprend un trou traversant (6) pour introduire le composant à tester dans la zone de mesure (5).
